# EUROPEAN PATENT SPECIFICATION

(11) **EP 4 560 432 B1**
(45) Date of publication and mention of the grant of the patent: **30.09.2026**
(21) Application number: 23919466.5
(22) Date of filing: 30.11.2023
(51) Int. Cl.: G06F 1/16, H04M 1/02, G09F 9/30

(54) **FOLDING MECHANISM AND ELECTRONIC APPARATUS**
KLAPPMECHANISMUS UND ELEKTRONISCHE VORRICHTUNG
MÉCANISME DE PLIAGE ET APPAREIL ÉLECTRONIQUE

(30) Priority: 31.01.2023 CN 202310121288
(43) Date of publication of application: 28.05.2025
(73) Proprietor: Huawei Technologies Co., Ltd., Shenzhen, Guangdong 518129 (CN)
(72) Inventor: WANG, Xuechan, Shenzhen, Guangdong 518129 (CN); SHEN, Hewen, Shenzhen, Guangdong 518129 (CN); LIAO, Li, Shenzhen, Guangdong 518129 (CN)
(74) Representative: Grünecker Patent- und Rechtsanwälte PartG mbB
(86) International application number: PCT/CN2023/135608
(87) International publication number: WO 2024/159902

(56) References cited:
- CN-A- 113 790 211
- CN-A- 115 388 085
- CN-A- 115 494 913
- CN-A- 115 539 496
- CN-U- 216 519 157
- CN-U- 218 151 977
- US-A1- 2020 383 220
- US-A1- 2021 263 565
- US-A1- 2024 338 058

## Description

### CROSS-REFERENCE TO RELATED APPLICATIONS

This application claims priority to Chinese Patent Application No. 202310121288.7, filed with the China National Intellectual Property Administration on January 31, 2023 and entitled "FOLDING MECHANISM AND ELECTRONIC DEVICE".

### TECHNICAL FIELD

This application relates to the field of terminal technologies, and in particular, to a folding mechanism and an electronic device.

### BACKGROUND

As technologies of flexible foldable screens become increasingly mature, a foldable terminal product has attracted wide attention because a size of a screen of the foldable terminal product can be flexibly changed in different application scenarios. In an existing folding mechanism, a rotating moving cam and a stationary cam are in contact with each other to generate torque force. Rotational resistance is provided when the cam rotates for climbing up, and rotational motive force is provided when the cam rotates for climbing down. In this way, an entire device has a self folding-and-unfolding function. However, for a hover function, damping force generated between fitting parts of a convex top face and a concave top face is not enough to overcome screen rebound force, and therefore free hovering cannot be implemented. CN 115 388 085 A relates to an electronic equipment including a folding device. CN 115 494 913 A relates to a folding shaft structure.

### SUMMARY

This application provides a folding mechanism and an electronic device, to implement free hovering of a screen.

According to the invention, a folding mechanism is defined in claim 1.

According to the folding mechanism provided in this application, the first connecting rod and the second connecting rod each are rotatively connected to the first main shaft assembly, the plurality of first recess portions are disposed at the end that is of the first main shaft assembly and that faces the first connecting rod, the first protrusion portions in one-to-one correspondence with the plurality of first recess portions are disposed on the first connecting rod, the plurality of second recess portions are disposed at the end that is of the first main shaft assembly and that faces the second connecting rod, and the second protrusion portions in one-to-one correspondence with the plurality of second recess portions are disposed on the second connecting rod. The surface of the first protrusion portion is attached to the surface of the first recess portion. Because the surface of the first recess portion is a slope, that is, a shape of a cross section of the first recess portion is triangular, relatively large friction force can be provided, and the first protrusion portion can move along the extension direction of the first recess portion. When the first connecting rod rotates relative to the first main shaft assembly, it can be ensured that the first protrusion portion is always attached to the first recess portion. Similarly, the second protrusion portion can also move along the extension direction of the second recess portion. When the second connecting rod rotates relative to the first main shaft assembly, it can be ensured that the second protrusion portion is always attached to the second recess portion. Therefore, when the folding mechanism is unfolded or folded, stable hovering can be achieved.

**In** some possible implementation solutions, the folding mechanism in this application further includes a second main shaft assembly, a third push rod mechanism, and a fourth push rod mechanism. The second main shaft assembly and the first main shaft assembly are disposed opposite to each other. The third push rod mechanism and the fourth push rod mechanism are located on a side that is of the second main shaft assembly and that faces the first main shaft assembly. The third push rod mechanism and the fourth push rod mechanism are respectively connected to two opposite ends of the second main shaft assembly. The third push rod mechanism includes a third connecting rod. One end of the third connecting rod is rotatively connected to the second main shaft assembly. A plurality of circumferentially distributed third recess portions are disposed at an end that is of the second main shaft assembly and that faces the third connecting rod. A surface that is of the third recess portion and that faces the third connecting rod is a slope. Third protrusion portions in one-to-one correspondence with the third recess portions are disposed on a side that is of the third connecting rod and that faces the second main shaft assembly. Each third protrusion portion is located in a corresponding third recess portion. A surface that is of the third protrusion portion and that faces the third recess portion is attached to a surface that is of the third recess portion and that faces the third protrusion portion. Each third protrusion portion can move relative to the third recess portion along an extension direction of the corresponding third recess portion. The fourth push rod mechanism includes a fourth connecting rod. One end of the fourth connecting rod is rotatively connected to the second main shaft assembly. A plurality of circumferentially distributed fourth recess portions are disposed at an end that is of the second main shaft assembly and that faces the fourth connecting rod. A surface that is of the fourth recess portion and that faces the fourth connecting rod is a slope. Fourth protrusion portions in one-to-one correspondence with the fourth recess portions are disposed on a side that is of the fourth connecting rod and that faces the second main shaft assembly. Each fourth protrusion portion is located in a corresponding fourth recess portion. A surface that is of the fourth protrusion portion and that faces the fourth recess portion is attached to a surface that is of the fourth recess portion and that faces the fourth protrusion portion. Each fourth protrusion portion can move relative to the fourth recess portion along an extension direction of the corresponding fourth recess portion. In this implementation solution, the third folding mechanism and the fourth folding mechanism are disposed, and the third folding mechanism and the fourth folding mechanism are symmetrically disposed with the first folding mechanism and the second folding mechanism. In other words, the folding mechanism includes two groups of folding mechanisms, to provide better folding performance while implementing a compact structure of the folding mechanism, thereby providing greater friction force and better implementing a hover function.

In some possible implementation solutions, the folding mechanism in this application further includes a first pin shaft. The first pin shaft sequentially passes through the first main shaft assembly, the first connecting rod, the third connecting rod, and the second main shaft assembly. The first pin shaft is fastened to the first main shaft assembly and is fastened to the second main shaft assembly. The first connecting rod can rotate around an axial direction of the first pin shaft relative to the first pin shaft. The third connecting rod can rotate around the axial direction of the first pin shaft relative to the first pin shaft. The first pin shaft is disposed to connect the folding mechanisms on the two sides, to ensure stability of the folding mechanisms.

In some possible implementation solutions, the folding mechanism in this application further includes a second pin shaft. The second pin shaft sequentially passes through the first main shaft assembly, the second connecting rod, the fourth connecting rod, and the second main shaft assembly. The second pin shaft is fastened to the first main shaft assembly and is fastened to the second main shaft assembly. The second connecting rod can rotate around an axial direction of the second pin shaft relative to the second pin shaft. The fourth connecting rod can rotate around the axial direction of the second pin shaft relative to the second pin shaft. The second pin shaft is disposed to connect the folding mechanisms on the two sides, to ensure stability of the folding mechanisms.

In some possible implementation solutions, the folding mechanism in this application further includes a first synchronization mechanism. The first synchronization mechanism includes a first rotating gear, a second rotating gear, and a first synchronization gear assembly that is located between the first rotating gear and the second rotating gear and that is engaged with the first rotating gear and the second rotating gear. The first rotating gear is fastened to the first connecting rod. The second rotating gear is fastened to the second connecting rod. The first rotating gear can rotate relative to the first main shaft assembly. The first synchronization gear assembly and the first rotating gear rotate synchronously, to implement synchronous reverse motion of the first rotating gear and the second rotating gear. In this implementation solution, the first synchronization mechanism is disposed, to implement synchronous reverse motion rotation of the first connecting rod and the second connecting rod, thereby better implementing a folding function of the folding mechanism.

In some possible implementation solutions, the first rotating gear is fastened to a side that is of the first connecting rod and that faces the second connecting rod, the second rotating gear is fastened to a side that is of the second connecting rod and that faces the first connecting rod, and the first synchronization gear assembly is located between the first connecting rod and the second connecting rod. The first synchronization gear assembly is disposed between the first connecting rod and the second connecting rod, to improve compactness of an overall structure of the folding mechanism. This helps implement a light and thin design of an electronic device.

In some possible implementation solutions, the folding mechanism in this application further includes a second synchronization mechanism. The second synchronization mechanism includes a third rotating gear, a fourth rotating gear, and a second synchronization gear that is located between the third rotating gear and the fourth rotating gear and that is engaged with the third rotating gear and the fourth rotating gear. The third rotating gear is fastened to the third connecting rod. The fourth rotating gear is fastened to the fourth connecting rod. The third rotating gear can rotate relative to the first main shaft assembly. The second synchronization gear assembly and the second rotating gear rotate synchronously, to implement synchronous reverse motion of the third rotating gear and the fourth rotating gear. In this implementation solution, the second synchronization mechanism is disposed, to implement synchronous reverse motion rotation of the third connecting rod and the fourth connecting rod, thereby better implementing a folding function of the folding mechanism.

In some possible implementation solutions, the third rotating gear is fastened to a side that is of the third connecting rod and that faces the fourth connecting rod, the fourth rotating gear is fastened to a side that is of the fourth connecting rod and that faces the third connecting rod, and the second synchronization gear assembly is located between the third connecting rod and the fourth connecting rod. The second synchronization gear assembly is disposed between the third connecting rod and the fourth connecting rod, to improve compactness of an overall structure of the folding mechanism. This helps implement a light and thin design of an electronic device.

In some possible implementation solutions, the folding mechanism in this application further includes a snap ring. The snap ring is fastened relative to the first main shaft assembly and the second main shaft assembly. The snap ring can have a positioning function for the first pin shaft and the second pin shaft, so that an overall structure of the folding mechanism is stable, thereby improving reliability of the electronic device.

According to the invention, an electronic device is defined in claim 12.

In the electronic device in this application, the folding mechanism having a hover function is disposed, to implement the hover function of the electronic device, thereby improving practicability of the electronic device.

### BRIEF DESCRIPTION OF DRAWINGS

FIG. 1a is an exploded view of an electronic device according to an embodiment of this application;
FIG. 1b is a rear view of an electronic device according to an embodiment of this application;
FIG. 2 is a diagram of a structure of an electronic device in a flattened state according to an embodiment of this application;
FIG. 3a and FIG. 3b each are a diagram of a structure of an electronic device in an intermediate state according to an embodiment of this application;
FIG. 4 is a diagram of a structure of an electronic device in a closed state according to an embodiment of this application;
FIG. 5 is a schematic exploded view of a structure of a folding mechanism according to an embodiment of this application;
FIG. 6 is a diagram of a structure of a folding mechanism according to an embodiment of this application;
FIG. 7 is a schematic exploded view of a partial structure of a folding mechanism according to an embodiment of this application;
FIG. 8 is a schematic exploded view of the folding mechanism in FIG. 6;
FIG. 9 is a diagram of a structure of a first main shaft assembly in FIG. 6;
FIG. 10 is a diagram of a structure of a first push rod mechanism in FIG. 6;
FIG. 11 is a diagram of a cross section of an unfolded structure of a first recess portion; and
FIG. 12 is a diagram of a cross section of an unfolded structure of a first rotating groove.

### Reference numerals:

1: electronic device; 10: first housing; 11: first surface; 12: second surface; 20: second housing; 21: third surface; 22: fourth surface; 30: flexible display; 100: folding mechanism; 101: first folding assembly; 1011: first support plate; 1012: first housing fastening bracket; 102: second folding assembly; 1021: second support plate; 1022: second housing fastening bracket; 110: main shaft assembly; 120: first push rod mechanism; 130: second push rod mechanism; 200: folding mechanism; 201: first pin shaft; 202: second pin shaft; 203: snap ring; 210: first main shaft assembly; 211: first recess portion; 212: second recess portion; 220: second main shaft assembly 221: third recess portion; 222: fourth recess portion; 230: first push rod mechanism; 231: first connecting rod; 2311: first protrusion portion; 2312: first rotating groove; 240: second push rod mechanism; 241: second connecting rod; 2411: second protrusion portion; 2412: second rotating groove; 250: third push rod mechanism; 251: third connecting rod; 2511: third protrusion portion; 2512: third rotating groove; 260: fourth push rod mechanism; 261: fourth connecting rod; 2611: fourth protrusion portion; 2612: fourth rotating groove; 270: first synchronization mechanism; 271: first rotating gear; 272: second rotating gear; 273: first synchronization gear; 274: second synchronization gear; 280: second synchronization mechanism; 281: third rotating gear; 282: fourth rotating gear; 283: third synchronization gear; 284: fourth synchronization gear; 290: damping assembly; 291: first cam; 2911: first rotating portion; 2912: second rotating portion; 292: second cam; 2921: third rotating portion; 2922: fourth rotating portion; 293: third pin shaft; 294: fourth pin shaft; 295: elastic member.

### DESCRIPTION OF EMBODIMENTS

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

A foldable terminal product needs to be folded and unfolded repeatedly when being used. In a process of repeatedly folding and unfolding the foldable terminal product, a screen is slightly deformed. When the product is in a flattened state, because a screen part corresponding to a hinge area is suspended, a surface of the screen is unevenly stressed. As a result, problems such as unevenness of the screen and creases on the surface of the screen occur. Especially when the product is used for a long time, a quantity of bending times increases, and the screen is frequently pulled and deformed. As a result, the problem of creases on the screen becomes more obvious.

On this basis, embodiments of this application may provide a folding mechanism and an electronic device. In this way, when a screen of the electronic device is flattened, a crease on the screen can be reduced. The following describes the folding mechanism and the electronic device in detail with reference to specific embodiments.

The electronic device in this application may be a foldable mobile phone, a foldable tablet, a foldable computer, or the like. This is not limited in embodiments of this application.

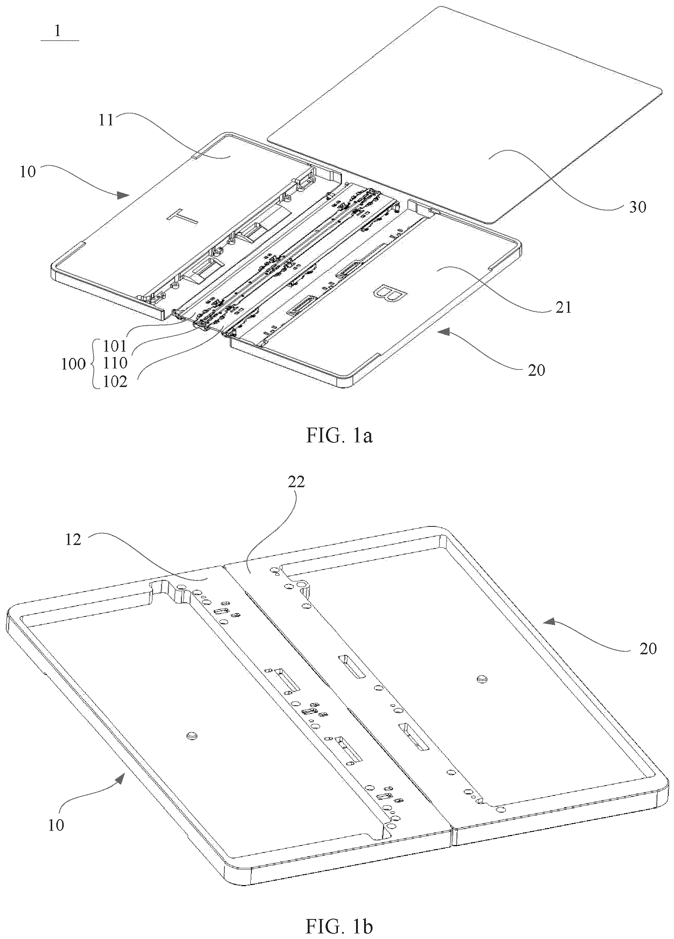

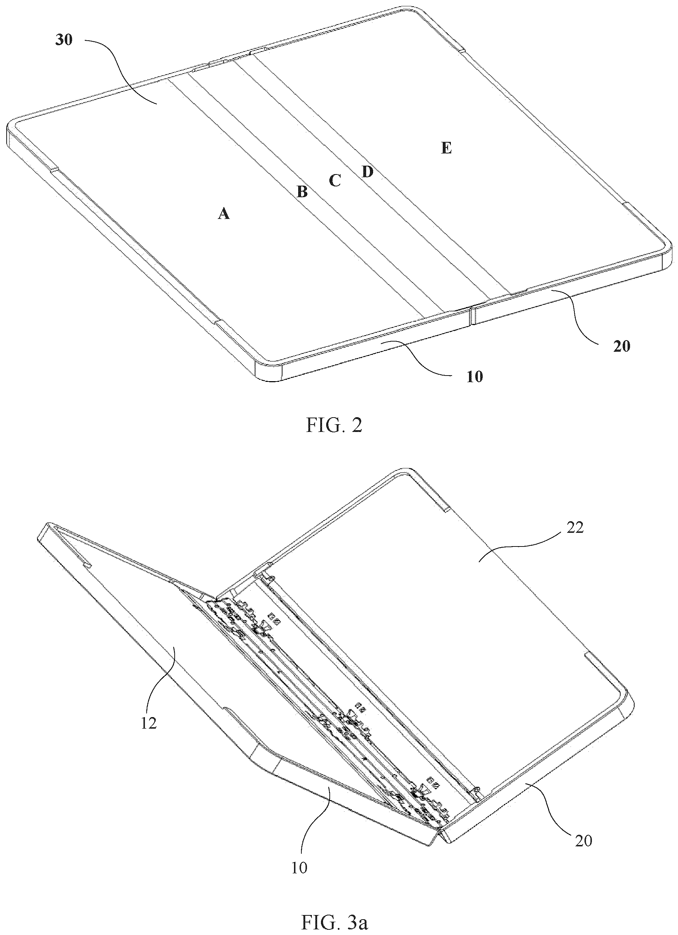

With reference to FIG. 1a and FIG. 2, FIG. 1a is a diagram of a structure of folding of an electronic device according to an embodiment of this application, and FIG. 2 is a diagram of a structure of the electronic device in a flattened state in FIG. 1a. The electronic device 1 may include a first housing 10, a second housing 20, a flexible display 30, and a folding mechanism 100. The first housing 10 and the second housing 20 are disposed on two sides of the folding mechanism 100 and are separately connected to the folding mechanism 100. The folding mechanism 100 can move, so that the first housing 10 and the second housing 20 are folded or unfolded relative to each other. The first housing 10 and the second housing 20 may be specifically a middle frame of the electronic device, or may be a collective term of a middle frame and a shell of the electronic device.

Refer to FIG. 1a and FIG. 1b. FIG. 1b is a diagram of a back structure of an electronic device according to an embodiment of this application. In this embodiment of this application, the first housing 10 has a first surface 11 and a second surface 12 that is disposed opposite to the first surface 11, and the second housing 20 has a third surface 21 and a fourth surface 22 that is disposed opposite to the third surface 21. The flexible display 30 is laid on the first surface 11 of the first housing 10, the third surface 21 of the second housing 20, and the folding mechanism 100. The first housing 10 and the second housing 20 may be jointly used to support the flexible display 30.

The folding mechanism 100 may include a main shaft assembly 110, a first folding assembly 101, and a second folding assembly 102. The first folding assembly 101 and the second folding assembly 102 are respectively connected to two opposite sides of the main shaft assembly 110. The first folding assembly 101 and the second folding assembly 102 each may rotate relative to the main shaft assembly 110, to implement folding and unfolding functions of the folding mechanism 100. Specifically, the first folding assembly 101 is disposed on a side of the first housing 10, and the second folding assembly 102 is disposed on a side of the second housing 20.

With reference to FIG. 2, FIG. 2 is a diagram of a structure of the electronic device including the first housing 10 and the second housing 20 that are unfolded to be in a flattened state. In this embodiment of this application, when the first housing 10 and the second housing 20 are in the flattened state, with reference to both FIG. 1a and FIG. 2, the first surface 11 of the first housing 10 and the third surface 21 of the second housing 20 are in a same plane. In this case, an included angle between the first surface 11 and the third surface 21 may be approximately 180° (a tolerance of a specific angle is also allowed, where the included angle between the first surface 11 and the third surface 21 is, for example, 165°, 177°, or 185°).

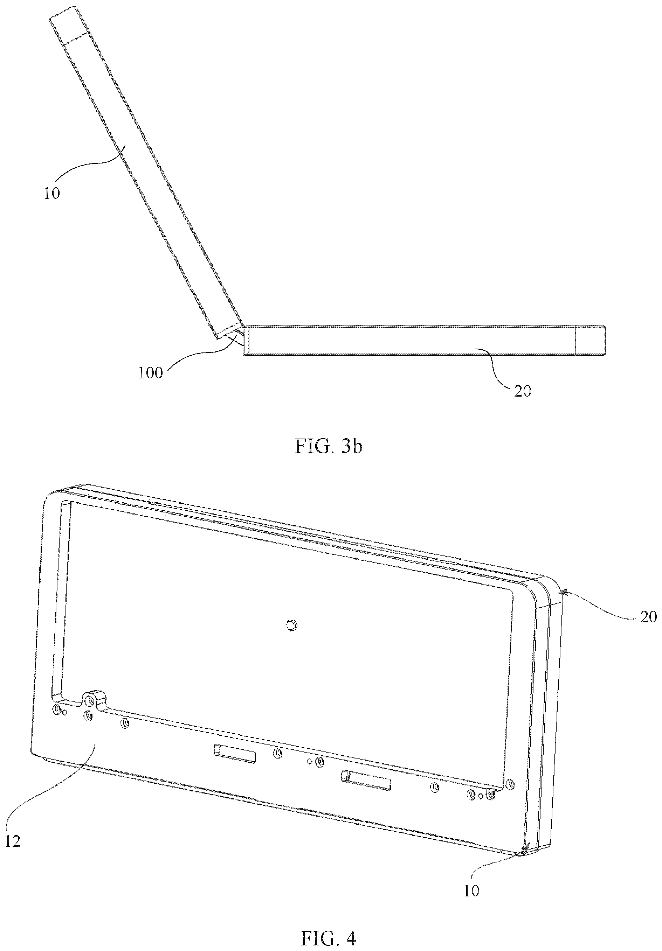

Refer to FIG. 3a and FIG. 3b. FIG. 3a is a diagram of a structure of an electronic device including the first housing 10 and the second housing 20 that rotate (unfolded or folded) relative to each other to an intermediate state. FIG. 3b is a side view of an electronic device including the first housing 10 and the second housing 20 that rotate (unfolded or folded) relative to each other to an intermediate state. The flexible display 30 is omitted in FIG. 3a, to facilitate display of forms of the two housings in the intermediate state. In this case, the electronic device may be in any state between a flattened state and a closed state. For example, the included angle between the first surface 11 of the first housing 10 and the third surface 21 of the second housing 20 may range, for example, from 130° to 150°.

Further with reference to FIG. 4, FIG. 4 is a diagram of a structure of an electronic device including the first housing 10 and the second housing 20 that are folded to be in a closed state. With reference to FIG. 1a and FIG. 4, when the first housing 10 and the second housing 20 are in the closed state, the first surface 11 of the first housing 10 and the third surface 21 of the second housing 20 face toward or away from each other (specifically related to a folding manner). In this case, the first surface 11 of the first housing 10 and the third surface 21 of the second housing 20 may form a small included angle or may be parallel to each other, so that the two housings can be completely folded (a tolerance of a specific angle is also allowed).

Further with reference to FIG. 1a and FIG. 2, the flexible display 30 continuously covers the first surface 11 of the first housing 10, the folding mechanism 100, and the third surface 21 of the second housing 20 of the electronic device 1. The flexible display 30 may be divided into consecutive areas A, B, C, D, and E. The areas B, C, and D include bent parts when the flexible display 30 is folded. The area A corresponds to the first surface 11 of the first housing 10, and may be fastened to the first surface 11 of the first housing 10. The area E corresponds to the third surface 21 of the second housing 20, and may be fastened to the third surface 21 of the second housing 20. It should be noted that boundaries of the areas B, C, and D shown in the figure are merely examples, and the boundaries of the areas B, C, and D may be adjusted based on a specific design of the folding mechanism 100.

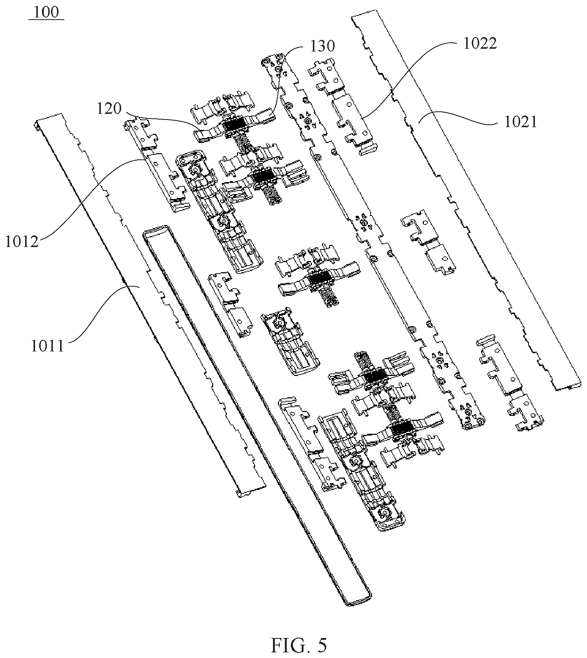

Refer to FIG. 1a and FIG. 5. FIG. 5 is a schematic exploded view of a structure of a folding mechanism according to an embodiment of this application. The first folding assembly 101 may include a first support plate 1011, a first housing fastening bracket 1012, and a first push rod mechanism 120. The first housing fastening bracket 1012 may be fastened to the first housing 10. The first support plate 1011 is rotatively connected to the first housing fastening bracket 1012. The first push rod mechanism 120 is slidingly connected to the first housing fastening bracket 1012. Similarly, the second folding assembly may include a second support plate 1021, a second housing fastening bracket 1022, and a second push rod mechanism 130. The second housing fastening bracket 1022 may be fastened to the second housing 20. The second support plate 1021 is rotatively connected to the second housing fastening bracket 1022. The second push rod mechanism 130 is slidingly connected to the second housing fastening bracket 1022. A side that is of the first support plate 1011 and that is away from the first housing fastening bracket 1012 and a side that is of the second support plate 1021 and that is away from the second housing fastening bracket 1022 may be used to support the flexible display 30. When the first housing 10 is folded relative to the main shaft assembly 110 from the flattened state, the first housing fastening bracket 1012 can be driven to rotate, and the first support plate 1011 rotates relative to the first housing fastening bracket 1012, to drive the flexible display 30 to rotate synchronously with the first housing 10. The first push rod mechanism 120 can move relative to the first housing fastening bracket 1012 along an arrangement direction of the first housing fastening bracket 1012 and the first push rod mechanism 120. Similarly, when the second housing 20 is folded relative to the main shaft assembly 110 from the flattened state, the second support plate 1021 can drive the flexible display 30 to rotate synchronously with the second housing 20, and the second push rod mechanism 130 can move relative to the second housing fastening bracket 1022 along an arrangement direction of the second housing fastening bracket 1022 and the second push rod mechanism 130.

Because the first support plate 1011 can rotate relative to the first housing 10, and the second support plate 1021 can rotate relative to the second housing 20, when the electronic device 1 is in a folded state, the first support plate 1011 and the second support plate 1021 can reach a specified position, to cooperate with each other to form a structure similar to a water droplet shape. In other words, a distance between parts that are of the first support plate 1011 and the second support plate 1021 and that are close to the main shaft assembly 110 is greater than a distance between parts that are of the first support plate 1011 and the second support plate 1021 and that are away from the main shaft assembly 110, so that accommodating space of the areas B, C, and D of the flexible display 30 is accommodated between the parts that are of the first support plate 1011 and the second support plate 1021 and that are close to the main shaft assembly 110.

In a folding process of the electronic device 1 in this embodiment, the first surface 11 of the first housing 10 gradually approaches the third surface 21 of the second housing 20. In other words, a folding manner of the electronic device 1 in this embodiment is inward folding.

It should be noted that FIG. 5 is merely an example of a folding mechanism in this application. The folding mechanism in this embodiment of this application may alternatively be in another structure form. For example, the folding mechanism may further include a third folding assembly and a fourth folding assembly, provided that the electronic device can be folded and unfolded when the folding mechanism is used in the electronic device.

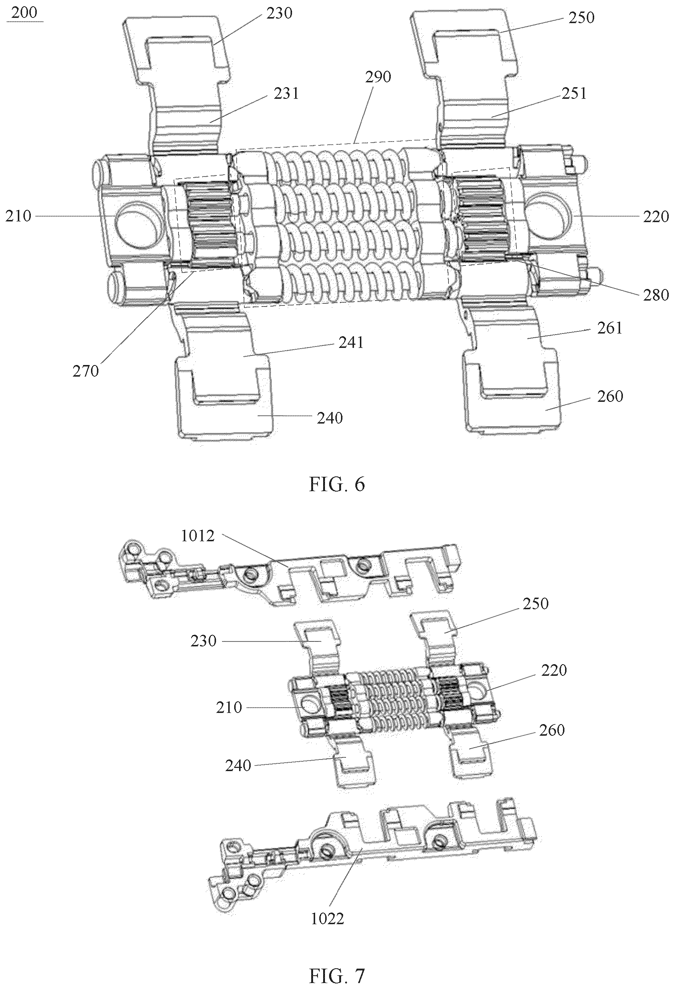

With reference to FIG. 6 and FIG. 7, FIG. 6 is a diagram of a structure of a folding mechanism according to an embodiment of this application, and FIG. 7 is a schematic exploded view of a partial structure of a folding mechanism according to an embodiment of this application. The folding mechanism 200 in this embodiment includes a first main shaft assembly 210, a second main shaft assembly 220, a first push rod mechanism 230, a second push rod mechanism 240, a third push rod mechanism 250, and a fourth push rod mechanism 260. The first main shaft assembly 210 and the second main shaft assembly 220 are disposed opposite to each other. The first push rod mechanism 230 and the second push rod mechanism 240 are located on a side that is of the first main shaft assembly 210 and that faces the second main shaft assembly 220. The first push rod mechanism 230 and the second push rod mechanism 240 are respectively located on two opposite sides of the first main shaft assembly 210. The third push rod mechanism 250 and the fourth push rod mechanism 260 are located on a side that is of the second main shaft assembly 220 and that faces the first main shaft assembly 210. The third push rod mechanism 250 and the fourth push rod mechanism 260 are respectively located on two opposite sides of the second main shaft assembly 220. Both the first push rod mechanism 230 and the second push rod mechanism 240 are rotatively connected to the first main shaft assembly 210, and a first synchronization mechanism 270 is disposed between the first push rod mechanism 230 and the second push rod mechanism 240, so that the first push rod mechanism 230 and the second push rod mechanism 240 can rotate synchronously. Both the third push rod mechanism 250 and the fourth push rod mechanism 260 are rotatively connected to the second main shaft assembly 220, and a second synchronization mechanism 280 is disposed between the third push rod mechanism 250 and the fourth push rod mechanism 260, so that the third push rod mechanism 250 and the fourth push rod mechanism 260 can rotate synchronously. A damping assembly 290 may be further disposed between the first synchronization mechanism 270 and the second synchronization mechanism 280, and the damping assembly 290 may be used to enable the first synchronization mechanism 270 and the second synchronization mechanism 280 to work simultaneously, so that the push rod mechanisms work simultaneously.

Compared with a folding mechanism having only the first push rod mechanism and the second push rod mechanism, in this embodiment of this application, as shown in FIG. 7, when the third push rod mechanism 250 and the fourth push rod mechanism 260 are disposed, corresponding sliding structures are disposed on a first housing fastening bracket 1012 and a second housing fastening bracket 1022.

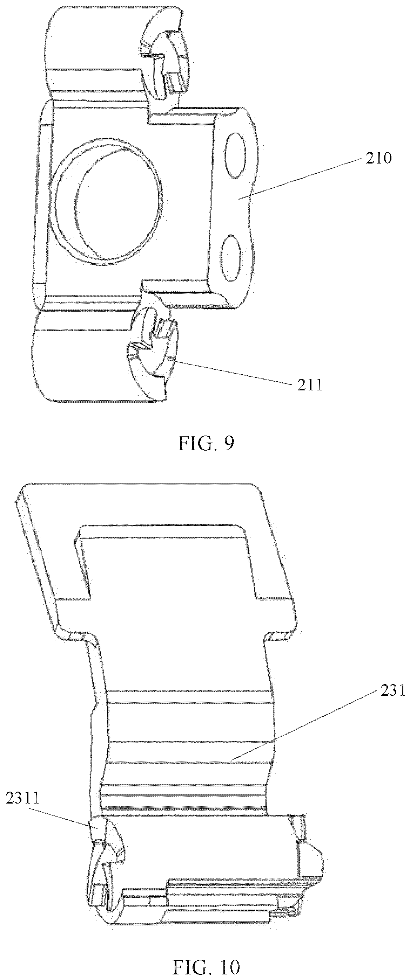

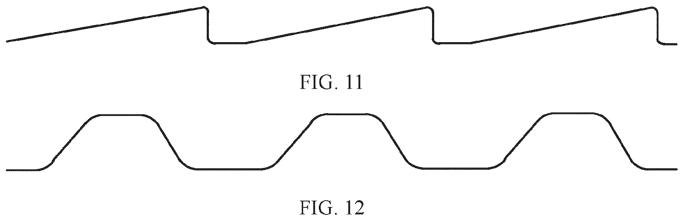

With reference to FIG. 8, FIG. 9, FIG. 10, and FIG. 11, FIG. 8 is a schematic exploded view of the folding mechanism in FIG. 6, FIG. 9 is a diagram of a structure of a first main shaft assembly in FIG. 6, FIG. 10 is a diagram of a structure of a first push rod mechanism in FIG. 6, and FIG. 11 is a diagram of a cross section of an unfolded structure of a first recess portion. The first push rod mechanism 230 includes a first connecting rod 231, and the first connecting rod 231 is rotatively connected to the first main shaft assembly 210. A plurality of circumferentially distributed first recess portions 211 are disposed at an end that is of the first main shaft assembly 210 and that faces the first connecting rod 231. A surface that is of the first recess portion 211 and that faces the first connecting rod 231 is a slope. To be specific, along an extension direction of the first recess portion 211, heights of the first recess portion 211 from one end to the other end gradually decreases. In this way, a cross section of the first recess portion 211 is of a triangular structure. First protrusion portions 2311 in one-to-one correspondence with the plurality of first recess portions 211 are disposed on a side that is of the first connecting rod 231 and that faces the first main shaft assembly 210. Each first protrusion portion 2311 is located in a corresponding first recess portion 211. A surface that is of each first protrusion portion 2311 and that faces the first recess portion 211 is a slope. The slope is exactly opposite to a shape of the slope of the first recess portion 211. It may be understood that, along a clockwise direction, heights of the slope of the first recess portion 211 are in descending order, and heights of the slope of the first protrusion portion 2311 are in ascending order. In this way, the surface of the first protrusion portion 2311 can be attached to the surface of the first recess portion 211. In addition, a size of the first recess portion 211 in the extension direction is greater than a size of the first protrusion portion 2311 in an extension direction. When the first connecting rod 231 rotates relative to the first main shaft assembly 210, the first protrusion portion 2311 can further rotate relative to the corresponding first recess portion 211 along the extension direction of the first recess portion 211. In this process, the first protrusion portion 2311 is always closely attached to the surface of the first recess portion 211, and an end part of the first recess portion 211 can further limit the first protrusion portion 2311. In this way, sufficient hover force can be provided for the folding mechanism 200, thereby ensuring a long-term stable hover capability of the folding mechanism 200.

Similarly, the second push rod mechanism 240 includes a second connecting rod 241, and the second connecting rod 241 is rotatively connected to the first main shaft assembly 210. A plurality of circumferentially distributed second recess portions 212 are disposed at an end that is of the first main shaft assembly 210 and that faces the second connecting rod 241. A surface that is of the second recess portion 212 and that faces the second connecting rod 241 is a slope. To be specific, a cross section of the second recess portion 212 is of a triangular structure. Second protrusion portions 2411 in one-to-one correspondence with the plurality of second recess portions 212 are disposed on a side that is of the second connecting rod 241 and that faces the first main shaft assembly 210. Each second protrusion portion 2411 is located in a corresponding second recess portion 212. A surface that is of each second protrusion portion 2411 and that faces the second recess portion 212 is a slope. The slope is exactly opposite to a shape of the slope of the second recess portion 212. It may be understood that, along a clockwise direction, heights of the slope of the second recess portion 212 are in descending order, and heights of the slope of the second protrusion portion 2411 are in ascending order. In this way, the surface of the second protrusion portion 2411 can be attached to the surface of the second recess portion 212. In addition, a size of the second recess portion 212 in the extension direction is greater than a size of the second protrusion portion 2411 in an extension direction. When the second connecting rod 241 rotates relative to the first main shaft assembly 210, the second protrusion portion 2411 can further rotate relative to the corresponding second recess portion 212 along the extension direction of the second recess portion 212. In this process, the second protrusion portion 2411 is always closely attached to the surface of the second recess portion 212, and an end part of the second recess portion 212 can further limit the second protrusion portion 2411. In this way, sufficient hover force can be provided for the folding mechanism 200, thereby ensuring a long-term stable hover capability of the folding mechanism 200.

The third push rod mechanism 250 and the first push rod mechanism 230 are located on a same side. The third push rod mechanism 250 includes a third connecting rod 251. The third connecting rod 251 is rotatively connected to the second main shaft assembly 220. A plurality of circumferentially distributed third recess portions 221 are disposed at an end that is of the second main shaft assembly 220 and that faces the third connecting rod 251. A surface that is of the third recess portion 221 and that faces the third connecting rod 251 is a slope. To be specific, a cross section of the third recess portion 221 is of a triangular structure. Third protrusion portions 2511 in one-to-one correspondence with the plurality of third recess portions 221 are disposed on a side that is of the third connecting rod 251 and that faces the second main shaft assembly 220. Each third protrusion portion 2511 is located in a corresponding third recess portion 221. A surface that is of each third protrusion portion 2511 and that faces the third recess portion 221 is a slope. The slope is exactly opposite to a shape of the slope of the third recess portion 221. It may be understood that, along a clockwise direction, heights of the slope of the third recess portion 221 are in descending order, and heights of the slope of the third protrusion portion 2511 are in ascending order. In this way, the surface of the third protrusion portion 2511 can be attached to the surface of the third recess portion 221. In addition, a size of the third recess portion 221 in the extension direction is greater than a size of the third protrusion portion 2511 in an extension direction. When the third connecting rod 251 rotates relative to the second main shaft assembly 220, the third protrusion portion 2511 can further rotate relative to the corresponding third recess portion 221 along the extension direction of the third recess portion 221. In this process, the third protrusion portion 2511 is always closely attached to the surface of the third recess portion 221, and an end part of the third recess portion 221 can further limit the third protrusion portion 2511. In this way, sufficient hover force can be provided for the folding mechanism 200, thereby ensuring a long-term stable hover capability of the folding mechanism 200.

The fourth push rod mechanism 260 and the second push rod mechanism 240 are located on a same side. The fourth push rod mechanism 260 includes a fourth connecting rod 261. The fourth connecting rod 261 is rotatively connected to the second main shaft assembly 220. A plurality of circumferentially distributed fourth recess portions 222 are disposed at an end that is of the second main shaft assembly 220 and that faces the fourth connecting rod 261. A surface that is of the fourth recess portion 222 and that faces the fourth connecting rod 261 is a slope. To be specific, a cross section of the fourth recess portion 222 is of a triangular structure. Fourth protrusion portions 2611 in one-to-one correspondence with the plurality of fourth recess portions 222 are disposed on a side that is of the fourth connecting rod 261 and that faces the second main shaft assembly 220. Each fourth protrusion portion 2611 is located in a corresponding fourth recess portion 222. A surface that is of each fourth protrusion portion 2611 and that faces the fourth recess portion 222 is a slope. The slope is exactly opposite to a shape of the slope of the fourth recess portion 222. It may be understood that, along a clockwise direction, heights of the slope of the fourth recess portion 222 are in descending order, and heights of the slope of the fourth protrusion portion 2611 are in ascending order. In this way, the surface of the fourth protrusion portion 2611 can be attached to the surface of the fourth recess portion 222. In addition, a size of the fourth recess portion 222 in the extension direction is greater than a size of the fourth protrusion portion 2611 in an extension direction. When the fourth connecting rod 261 rotates relative to the second main shaft assembly 220, the fourth protrusion portion 2611 can further rotate relative to the corresponding fourth recess portion 222 along the extension direction of the fourth recess portion 222. In this process, the fourth protrusion portion 2611 is always closely attached to the surface of the fourth recess portion 222, and an end part of the fourth recess portion 222 can further limit the fourth protrusion portion 2611. In this way, sufficient hover force can be provided for the folding mechanism 200, thereby ensuring a long-term stable hover capability of the folding mechanism 200.

It may be understood that, an overall structure of the first main shaft assembly 210, the first push rod mechanism 230, and the second push rod mechanism 240 is symmetrically disposed with an overall structure of the second main shaft assembly 220, the third push rod mechanism 250, and the fourth push rod mechanism 260. In addition, stability of the folding mechanism 200 can be improved by disposing two groups of push rod mechanisms. In addition, the plurality of push rod mechanisms may further provide greater hover friction force for the folding mechanism 200, to better implement stable hovering.

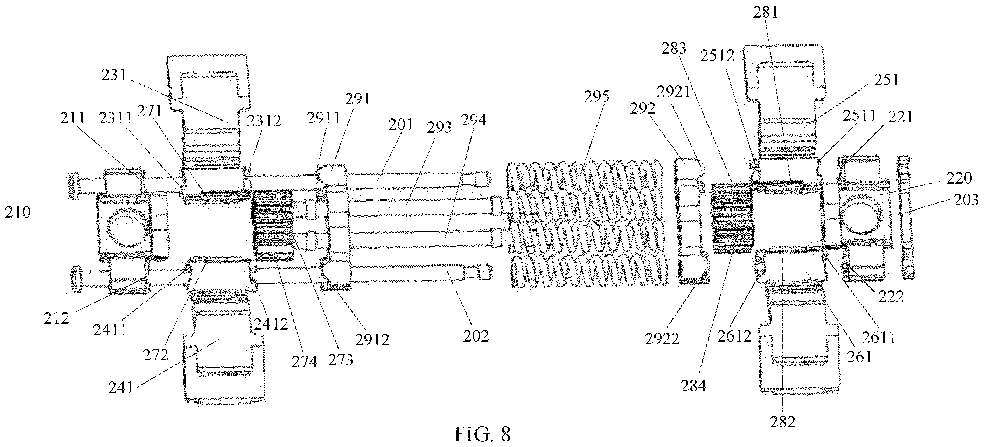

Still with reference to FIG. 6 and FIG. 8, the folding mechanism 200 may further be provided with a first pin shaft 201 and a second pin shaft 202, and the first pin shaft 201 and the second pin shaft 202 are disposed in parallel. The first pin shaft 201 sequentially passes through the first main shaft assembly 210, the first connecting rod 231, the third connecting rod 251, and the second main shaft assembly 220. The second pin shaft 202 sequentially passes through the first main shaft assembly 210, the second connecting rod 241, the fourth connecting rod 261, and the second main shaft assembly 220. Structures in the folding mechanism 200 may be assembled by using the first pin shaft 201 and the second pin shaft 202, thereby ensuring structural stability and structural compactness of the folding mechanism 200.

With reference to FIG. 6, FIG. 8, and FIG. 12, FIG. 12 is a diagram of a cross section of an unfolded structure of a first rotating groove. The first synchronization mechanism 270 includes a first rotating gear 271, a second rotating gear 272, and a first synchronization gear assembly. The first synchronization gear assembly may include a first synchronization gear 273 and a second synchronization gear 274. The first rotating gear 271 is fastened to a side that is of the first connecting rod 231 and that faces the second connecting rod 241. The second rotating gear 272 is fastened to a side that is of the second connecting rod 241 and that faces the first connecting rod 231. The first synchronization gear assembly is located between the first rotating gear 271 and the second rotating gear 272. The first synchronization gear 273 is engaged with the first rotating gear 271, and is engaged with the second synchronization gear 274. The second synchronization gear 274 is engaged with the second rotating gear 272, and is engaged with the first synchronization gear 273. The first rotating gear 271 may be configured to receive acting force from the outside, and rotate under the acting force, to drive the first push rod mechanism 230 to rotate. Similarly, the second rotating gear 272 may also be configured to receive acting force from the outside, and rotate under the acting force, to drive the second push rod mechanism 240 to rotate. For example, when the first rotating gear 271 rotates clockwise, the first synchronization gear 273 rotates counter-clockwise, the second synchronization gear 274 rotates clockwise, and the second rotating gear 272 may rotate counter-clockwise. **In** this way, when the electronic device is folded, the first rotating gear 271 and the second rotating gear 272 can rotate reversely synchronously, to drive the first push rod mechanism 230 and the second push rod mechanism 240 to rotate reversely synchronously, thereby facilitating screen folding.

Similarly, the second synchronization mechanism 280 includes a third rotating gear 281, a fourth rotating gear 282, and a second synchronization gear assembly. The second synchronization gear assembly may include a third synchronization gear 283 and a fourth synchronization gear 284. The third rotating gear 281 is fastened to a side that is of the third connecting rod 251 and that faces the fourth connecting rod 261. The fourth rotating gear 282 is fastened to a side that is of the fourth connecting rod 261 and that faces the third connecting rod 251. The second synchronization gear assembly is located between the third rotating gear 281 and the fourth rotating gear 282. The third synchronization gear 283 is engaged with the third rotating gear 281, and is engaged with the fourth synchronization gear 284. The fourth synchronization gear 284 is engaged with the fourth rotating gear 282, and is engaged with the third synchronization gear 283. The third rotating gear 281 may be configured to receive acting force from the outside, and rotate under the acting force, to drive the third push rod mechanism 250 to rotate. Similarly, the fourth rotating gear 282 may also be configured to receive acting force from the outside, and rotate under the acting force, to drive the fourth push rod mechanism 260 to rotate. For example, when the third rotating gear 281 rotates clockwise, the third synchronization gear 283 rotates counter-clockwise, the fourth synchronization gear 284 rotates clockwise, and the fourth rotating gear 282 may rotate counter-clockwise. In this way, when the electronic device is folded, the third rotating gear 281 and the fourth rotating gear 282 can rotate reversely synchronously, to drive the third push rod mechanism 250 and the third push rod mechanism 250 to rotate reversely synchronously, thereby facilitating screen folding.

Still with reference to FIG. 6 and FIG. 7, the damping assembly 290 includes a third pin shaft 293, a fourth pin shaft 294, a first cam 291, a second cam 292, and a plurality of elastic members 295. The third pin shaft 293 and the fourth pin shaft 294 are located between the first pin shaft 201 and the second pin shaft 202. The third pin shaft 293, the fourth pin shaft 294, and the first pin shaft 201 are disposed in parallel. One end of the third pin shaft 293 is fastened to the first main shaft assembly 210, and the other end is fastened to the second main shaft assembly 220. The first synchronization gear 273 is sleeved on an end that is of the first pin shaft 201 and that is close to the first main shaft assembly 210. The third synchronization gear 283 is sleeved on an end that is of the first pin shaft 201 and that is close to the second main shaft assembly 220. Both the first synchronization gear 273 and the third synchronization gear 283 can rotate around an axis of the first pin shaft 201. One end of the fourth pin shaft 294 is fastened to the first main shaft assembly 210, and the other end is fastened to the second main shaft assembly 220. The second synchronization gear 274 is sleeved on an end that is of the fourth pin shaft 294 and that is close to the first main shaft. The fourth synchronization gear 284 is sleeved on an end that is of the fourth pin shaft 294 and that is close to the second main shaft. Both the second synchronization gear 274 and the fourth synchronization gear 284 can rotate around an axis of the second pin shaft 202.

The first cam 291 and the second cam 292 are disposed opposite to each other. The first cam 291 is located on a side that is of the first connecting rod 231 and that faces the third connecting rod 251. The second cam 292 is located on a side that is of the third connecting rod 251 and that faces the first connecting rod 231. The four pin shafts pass through the first cam 291, and the four pin shaft pass through the second cam 292. A plurality of circumferentially disposed first rotating grooves 2312 are disposed on a side that is of the first connecting rod 231 and that faces the first cam 291. The first rotating groove 2312 may be of a "V"-shaped structure or a trapezoidal structure. First rotating portions 2911 in one-to-one correspondence with the plurality of first rotating grooves 2312 are disposed on a side that is of the first cam 291 and that faces the first connecting rod 231. A shape of the first rotating portion 2911 is similar to a shape of the first rotating groove 2312. Each first rotating portion 2911 can extend into a corresponding first rotating groove 2312. A plurality of circumferentially disposed second rotating grooves 2412 are disposed on a side that is of the second connecting rod 241 and that faces the first cam 291. The second rotating groove 2412 may be of a "V"-shaped structure or a trapezoidal structure. Second rotating portions 2912 in one-to-one correspondence with the plurality of second rotating grooves 2412 are disposed on a side that is of the first cam 291 and that faces the second connecting rod 241. A shape of the second rotating portion 2912 is similar to a shape of the second rotating groove 2412. Each second rotating portion 2912 can extend into a corresponding second rotating groove 2412. A plurality of circumferentially disposed third rotating grooves 2512 are disposed on a side that is of the third connecting rod 251 and that faces the second cam 292. The third rotating groove 2512 may be of a "V"-shaped structure or a trapezoidal structure. Third rotating portions 2921 in one-to-one correspondence with the plurality of third rotating grooves 2512 are disposed on a side that is of the second cam 292 and that faces the third connecting rod 251. A shape of the third rotating portion 2921 is similar to a shape of the third rotating groove 2512. Each third rotating portion 2921 can extend into a corresponding third rotating groove 2512. A plurality of circumferentially disposed fourth rotating grooves 2612 are disposed on a side that is of the fourth connecting rod 261 and that faces the second cam 292. The fourth rotating groove 2612 may be of a "V"-shaped structure or a trapezoidal structure. Fourth rotating portions 2922 in one-to-one correspondence with the plurality of fourth rotating grooves 2612 are disposed on a side that is of the second cam 292 and that faces the fourth connecting rod 261. A shape of the fourth rotating portion 2922 is similar to a shape of the fourth rotating groove 2612. Each fourth rotating portion 2922 can extend into a corresponding fourth rotating groove 2612.

There are four elastic members 295. Each elastic member 295 is located between the first cam 291 and the second cam 292. Each elastic member 295 is sleeved on surfaces of the first pin shaft 201, the second pin shaft 202, the third pin shaft 293, and the fourth pin shaft 294. One end of each elastic member 295 is fastened to a side that is of the first cam 291 and that is away from the first main shaft assembly 210, and the other end is fastened to a side that is of the second cam 292 and that is away from the second main shaft assembly 220. A type of the elastic member 295 is not limited. For example, the elastic member 295 may be a spring.

The first connecting rod 231 is used as an example. When the first rotating gear 271 rotates relative to the first main shaft assembly 210 under external force, an end face that is of the first connecting rod 231 and that faces the first cam 291 can be driven to rotate relative to the first cam 291. In this case, under an action of the first rotating groove 2312 and the first rotating portion 2911, the first connecting rod 231 generates acting force on the first cam 291 to make the first cam 291 away from the first connecting rod 231. In this way, the first cam 291 is driven to move away from the first main shaft assembly 210 along an axial direction of the first pin shaft 201. When the first cam 291 moves away from the first main shaft assembly 210, the elastic member 295 sleeved on the first pin shaft 201 may be compressed, so that the elastic member 295 deforms and generates elastic reset force. The elastic member 295 transfers the elastic reset force to the first cam 291. Under cooperation of the first rotating groove 2312 and the first rotating portion 2911, the elastic reset force of the elastic member 295 is converted into acting force for driving the first connecting rod 231 to rotate. In this case, the first connecting rod 231 rotates around the axis of the first pin shaft 201, and drives the first push rod mechanism 230 to rotate.

Working principles of the second rotating gear 272, the third rotating gear 281, and the fourth rotating gear 282 are the same as the working principle of the first rotating gear 271, and are not described herein again.

In this embodiment, the first connecting rod 231 is used as an example. A hover function structure and a damping structure are respectively disposed at two opposite ends of the first connecting rod 231. In this way, free hovering of the folding mechanism 200 is implemented, and a synchronous folding function of the folding mechanism 200 is implemented. In addition, modules on the two sides are independent of each other, thereby improving a service life of the damping assembly 290. When a structure on one side is worn out or fails, structural performance on the other side is not affected. In this way, reliability and durability of the electronic device can be improved.

Still with reference to FIG. 8, a snap ring 203 is disposed on a side that is of the second main shaft assembly 220 and that is away from the first main shaft assembly 210, and the snap ring 203 is fastened relative to the first main shaft assembly 210 and the second main shaft assembly 220. The snap ring 203 can have a positioning function for the first pin shaft 201 and the second pin shaft 202, so that an overall structure of the folding mechanism 200 is stable, thereby improving reliability of the electronic device.

Compared with an existing foldable electronic device, the electronic device in this application not only can implement a hover function of a foldable machine product, but also has good durability and is not prone to abrasion.

The foregoing descriptions are merely specific implementations of this application, but are not intended to limit the protection scope of this application. Therefore, the protection scope of this application shall be subject to the protection scope of the claims

## Claims

1. A folding mechanism (100, 200) having a hover function, comprising a first main shaft assembly (210), a first push rod mechanism (120, 230), and a second push rod mechanism (130, 240), wherein the first push rod mechanism (120, 230) and the second push rod mechanism (130, 240) are located on a same side of the first main shaft assembly (210), and the first push rod mechanism (120, 230) and the second push rod mechanism (130, 240) are respectively connected to two opposite ends of the first main shaft assembly (210);
the first push rod mechanism (230) comprises a first connecting rod (231), and one end of the first connecting rod (231) is rotatively connected to the first main shaft assembly (210);
**characterized by**
a plurality of circumferentially distributed first recess portions (211) are disposed at a first end of the first main shaft assembly (210) and said first end of the first main shaft assembly (210)faces the first connecting rod (231), a surface of the first recess portion (211) is a slope, and said surface of the first recess portion (211) faces the first connecting rod (231), first protrusion portions (2311) in one-to-one correspondence with the first recess portions (211) are disposed on a side of the first connecting rod (231) and said side of the first connecting rod (231) faces the first main shaft assembly (210), each first protrusion portion (2311) is located in a corresponding first recess portion (211), a surface of the first protrusion portion (2311) facing the first recess portion (211) is attached to the surface of the first recess portion (211) facing the first protrusion portion (2311), and each first protrusion portion (2311) can move relative to the first recess portion (211) along an extension direction of the corresponding first recess portion (211);
the second push rod mechanism (240) comprises a second connecting rod (241), and one end of the second connecting rod (241) is rotatively connected to the first main shaft assembly (210); and
a plurality of circumferentially distributed second recess portions (212) are disposed at a second end of the first main shaft assembly (210) and said second end of the first main shaft assembly (210) faces the second connecting rod (241), a surface of the second recess portion (212) is a slope, and said surface of the second recess portion (212) faces the second connecting rod (241), second protrusion portions (2411) in one-to-one correspondence with the second recess portions (212) are disposed on a side of the second connecting rod (241) and said side of the second connecting rod (241) faces the first main shaft assembly (210), each second protrusion portion (2411) is located in a corresponding second recess portion (212), a surface of the second protrusion portion (2411) facing the second recess portion (212) is attached to the surface of the second recess portion (212) facing the second protrusion portion (2411), and each second protrusion portion (2411) can move relative to the second recess portion (212) along an extension direction of the corresponding second recess portion (212),
wherein the first push rod mechanism (230) and the second push rod mechanism (240) are configured to provide hover friction force for the folding mechanism (200).

2. The folding mechanism (200) according to claim 1, further comprising a second main shaft assembly (220), a third push rod mechanism (250), and a fourth push rod mechanism (260), wherein the second main shaft assembly (220) and the first main shaft assembly (210) are disposed opposite to each other, the third push rod mechanism (250) and the fourth push rod mechanism (260) are located on a side of the second main shaft assembly (220) and said side of the second main shaft assembly (220) faces the first main shaft assembly (210), and the third push rod mechanism (250) and the fourth push rod mechanism (260) are respectively connected to two opposite ends of the second main shaft assembly (220);
the third push rod mechanism (250) comprises a third connecting rod (251), and one end of the third connecting rod (251) is rotatively connected to the second main shaft assembly (220);
a plurality of circumferentially distributed third recess portions (221) are disposed at a first end of the second main shaft assembly (220) and said first end of the second main shaft assembly (220) faces the third connecting rod (251), a surface of the third recess portion (221) is a slope, and said surface of the third recess portion (221) faces the third connecting rod (251), third protrusion portions (2511) in one-to-one correspondence with the third recess portions (221) are disposed on a side of the third connecting rod (251) and said side of the third connecting rod (251) faces the second main shaft assembly (220), each third protrusion portion (2511) is located in a corresponding third recess portion (221), a surface of the third protrusion portion (2511) facing the third recess portion (221) is attached to the surface of the third recess portion (221) facing the third protrusion portion (2511), and each third protrusion portion (2511) can move relative to the third recess portion (221) along an extension direction of the corresponding third recess portion (221);
the fourth push rod mechanism (260) comprises a fourth connecting rod (261), and one end of the fourth connecting rod (261) is rotatively connected to the second main shaft assembly (220); and
a plurality of circumferentially distributed fourth recess portions (222) are disposed at a second end of the second main shaft assembly (220) and said second end of the second main shaft assembly (220) faces the fourth connecting rod (261), a surface of the fourth recess portion (222) is a slope, and said surface of the fourth recess portion (222) faces the fourth connecting rod (261), fourth protrusion portions (2611) in one-to-one correspondence with the fourth recess portions (222) are disposed on a side of the fourth connecting rod (261) and said side of the fourth connecting rod (261) faces the second main shaft assembly (220), each fourth protrusion portion (2611) is located in a corresponding fourth recess portion (222), a surface of the fourth protrusion portion (2611) facing the fourth recess portion (222) is attached to the surface of the fourth recess portion (222) facing the fourth protrusion portion (2611), and each fourth protrusion portion (2611) can move relative to the fourth recess portion (222) along an extension direction of the corresponding fourth recess portion (222),
wherein the third push rod mechanism (250) and the fourth push rod mechanism (260) are configured to provide hover friction force for the folding mechanism (200).

3. The folding mechanism (200) according to claim 2, further comprising a first pin shaft (201), wherein the first pin shaft (201) sequentially passes through the first main shaft assembly (210), the first connecting rod (231), the third connecting rod (251), and the second main shaft assembly (220), the first pin shaft (201) is fastened to the first main shaft assembly (210) and is fastened to the second main shaft assembly (220), the first connecting rod (231) can rotate around an axial direction of the first pin shaft (201) relative to the first pin shaft (201), and the third connecting rod (251) can rotate around the axial direction of the first pin shaft (201) relative to the first pin shaft (201).

4. The folding mechanism (200) according to claim 2 or 3, further comprising a second pin shaft (202), wherein the second pin shaft (202) sequentially passes through the first main shaft assembly (210), the second connecting rod (241), the fourth connecting rod (261), and the second main shaft assembly (220), the second pin shaft (202) is fastened to the first main shaft assembly (210) and is fastened to the second main shaft assembly (220), the second connecting rod (241) can rotate around an axial direction of the second pin shaft (202) relative to the second pin shaft (202), and the fourth connecting rod (261) can rotate around the axial direction of the second pin shaft (202) relative to the second pin shaft (202).

5. The folding mechanism (200) according to any one of claims 1 to 4, further comprising a first synchronization mechanism (270), wherein the first synchronization mechanism (270) comprises a first rotating gear (271), a second rotating gear (272), and a first synchronization gear assembly (273, 274), wherein the first synchronization gear assembly (273, 274) is located between the first rotating gear (271) and the second rotating gear (272) and is engaged with the first rotating gear (271) and the second rotating gear (272); and
the first rotating gear (271) is fastened to the first connecting rod (231), the second rotating gear (272) is fastened to the second connecting rod (241), the first rotating gear (271) can rotate relative to the first main shaft assembly (210), and the first synchronization gear assembly (273, 274) and the first rotating gear (271) rotate synchronously, to implement synchronous reverse motion of the first rotating gear (271) and the second rotating gear (272).

6. The folding mechanism (200) according to claim 5, wherein the first rotating gear (271) is fastened to an another side of the first connecting rod (231), wherein the another side of the first connecting rod (231) faces the second connecting rod (241), the second rotating gear (272) is fastened to an another side of the second connecting rod (241), wherein the another side of the second connecting rod (241) faces the first connecting rod (231), and the first synchronization gear assembly (273, 274) is located between the first connecting rod (231) and the second connecting rod (241).

7. The folding mechanism (200) according to claim 2 and any one of claims 3 to 6, further comprising a second synchronization mechanism (280), wherein the second synchronization mechanism (280) comprises a third rotating gear (281), a fourth rotating gear (282), and a second synchronization gear assembly (283, 284), wherein the second synchronization gear assembly (283, 284) is located between the third rotating gear (281) and the fourth rotating gear (282) and is engaged with the third rotating gear (281) and the fourth rotating gear (282); and
the third rotating gear (281) is fastened to the third connecting rod (251), the fourth rotating gear (282) is fastened to the fourth connecting rod (261), the third rotating gear (281) can rotate relative to the second main shaft assembly (220), and the second synchronization gear assembly (283, 284) and the third rotating gear (281) rotate synchronously, to implement synchronous reverse motion of the third rotating gear (281) and the fourth rotating gear (282).

8. The folding mechanism (200) according to claim 7, wherein the third rotating gear (281) is fastened to an another side of the third connecting rod (251), wherein the another side of the third connecting rod (251) faces the fourth connecting rod (261), the fourth rotating gear (282) is fastened to an another side of the fourth connecting rod (261), wherein the another side of the fourth connecting rod (261) faces the third connecting rod (251), and the second synchronization gear assembly (283, 284) is located between the third connecting rod (251) and the fourth connecting rod (261).

9. The folding mechanism (200) according to any one of claims 2 to 8, further comprising a snap ring (203), wherein the snap ring (203) is located on a side of the second main shaft assembly (220) that is away from the first main shaft assembly (210), and the snap ring is fastened relative to the first main shaft assembly (210) and the second main shaft assembly (220).

10. The folding mechanism (200) according to any one of claims 1 to 9, wherein:
a surface of each of the first protrusion portion (2311) is a slope and said surface faces the first recess portion (211), and the said slope of the surface of the first protrusion portion (2311) is opposite to a shape of the slope of the first recess portion (211),
a size of the first recess portion (211) in the extension direction is greater than a size of the first protrusion portion (2311) in the extension direction,
a surface of each of the second protrusion portion (2411) is a slope and said surface faces the second recess portion (212), and the said slope of the surface of the second protrusion portion (2411) is opposite to a shape of the slope of the second recess portion (212), and
a size of the second recess portion (212) in the extension direction is greater than a size of the second protrusion portion (2411) in the extension direction.

11. The folding mechanism (200) according to claim 2 and any one of claims 3-10, wherein:
a surface of each of the third protrusion portion (2511) is a slope and said surface faces the third recess portion (221) and the said slope of the surface of the third protrusion portion (2511) is opposite to a shape of the slope of the third recess portion (221),
a size of the third recess portion (221) in the extension direction is greater than a size of the third protrusion portion (2511) in an extension direction,
a surface of each of the fourth protrusion portion (2611) is a slope and said surface faces the fourth recess portion (222) and the said slope of the surface of the fourth protrusion portion (2611) is opposite to a shape of the slope of the fourth recess portion (222), and
a size of the fourth recess portion (222) in the extension direction is greater than a size of the fourth protrusion portion (2611) in an extension direction.

12. An electronic device (1), comprising a first housing (10), a second housing (20), a flexible display (30), and the folding mechanism (100, 200) according to any one of claims 1 to 11, wherein the folding mechanism is connected to the first housing (10) and the second housing (20), so that the first housing (10) and the second housing (20) are folded and unfolded relative to each other; and
the flexible display (30) is laid on the first housing (10), the second housing (20), and the folding mechanism (100, 200), and the flexible display (30) is fastened to the first housing (10) and the second housing (20).

## Patentansprüche

1. Klappmechanismus (100, 200), der eine Schwebefunktion aufweist, umfassend eine erste Hauptwellenbaugruppe (210), einen ersten Schubstangenmechanismus (120, 230) und einen zweiten Schubstangenmechanismus (130, 240), wobei sich der erste Schubstangenmechanismus (120, 230) und der zweite Schubstangenmechanismus (130, 240) auf derselben Seite der ersten Hauptwellenbaugruppe (210) befinden, und der erste Schubstangenmechanismus (120, 230) und der zweite Schubstangenmechanismus (130, 240) jeweils mit zwei gegenüberliegenden Enden der ersten Hauptwellenbaugruppe (210) verbunden sind;
der erste Schubstangenmechanismus (230) eine erste Verbindungsstange (231) umfasst, und ein Ende der ersten Verbindungsstange (231) drehbar mit der ersten Hauptwellenbaugruppe (210) verbunden ist;
**gekennzeichnet durch**
eine Vielzahl von in Umfangsrichtung verteilten ersten Aussparungsabschnitten (211) an einem ersten Ende der ersten Hauptwellenbaugruppe (210) angeordnet ist und das erste Ende der ersten Hauptwellenbaugruppe (210) der ersten Verbindungsstange (231) zugewandt ist, eine Oberfläche des ersten Aussparungsabschnitts (211) eine Schräge ist, und die Oberfläche des ersten Aussparungsabschnitts (211) der ersten Verbindungsstange (231) zugewandt ist, erste Vorsprungsabschnitte (2311) in einer Eins-zu-Eins-Entsprechung zu den ersten Aussparungsabschnitten (211) auf einer Seite der ersten Verbindungsstange (231) angeordnet sind und die Seite der ersten Verbindungsstange (231) der ersten Hauptwellenbaugruppe (210) zugewandt ist, sich jeder erste Vorsprungsabschnitt (2311) in einem entsprechenden ersten Aussparungsabschnitt (211) befindet, eine Oberfläche des ersten Vorsprungsabschnitts (2311), die dem ersten Aussparungsabschnitt (211) zugewandt ist, an der Oberfläche des ersten Aussparungsabschnitts (211), die dem ersten Vorsprungsabschnitt (2311) zugewandt ist, befestigt ist, und sich jeder erste Vorsprungsabschnitt (2311) relativ zu dem ersten Aussparungsabschnitt (211) entlang einer Erstreckungsrichtung des entsprechenden ersten Aussparungsabschnitts (211) bewegen kann;
der zweite Schubstangenmechanismus (240) eine zweite Verbindungsstange (241) umfasst, und ein Ende der zweiten Verbindungsstange (241) drehbar mit der ersten Hauptwellenbaugruppe (210) verbunden ist; und
eine Vielzahl von in Umfangsrichtung verteilten zweiten Aussparungsabschnitten (212) an einem zweiten Ende der ersten Hauptwellenbaugruppe (210) angeordnet ist und das zweite Ende der ersten Hauptwellenbaugruppe (210) der zweiten Verbindungsstange (241) zugewandt ist, eine Oberfläche des zweiten Aussparungsabschnitts (212) eine Schräge ist, und die Oberfläche des zweiten Aussparungsabschnitts (212) der zweiten Verbindungsstange (241) zugewandt ist, zweite Vorsprungsabschnitte (2411) in einer Eins-zu-Eins-Entsprechung zu den zweiten Aussparungsabschnitten (212) auf einer Seite der zweiten Verbindungsstange (241) angeordnet sind und die Seite der zweiten Verbindungsstange (241) der ersten Hauptwellenbaugruppe (210) zugewandt ist, sich jeder zweite Vorsprungsabschnitt (2411) in einem entsprechenden zweiten Aussparungsabschnitt (212) befindet, eine Oberfläche des zweiten Vorsprungsabschnitts (2411), die dem zweiten Aussparungsabschnitt (212) zugewandt ist, an der Oberfläche des zweiten Aussparungsabschnitts (212), die dem zweiten Vorsprungsabschnitt (2411) zugewandt ist, befestigt ist, und sich jeder zweite Vorsprungsabschnitt (2411) relativ zu dem zweiten Aussparungsabschnitt (212) entlang einer Erstreckungsrichtung des entsprechenden zweiten Aussparungsabschnitts (212) bewegen kann,
wobei der erste Schubstangenmechanismus (230) und der zweite Schubstangenmechanismus (240) dazu konfiguriert sind, eine Schwebe-Reibungskraft für den Klappmechanismus (200) bereitzustellen.

2. Klappmechanismus (200) nach Anspruch 1, ferner umfassend eine zweite Hauptwellenbaugruppe (220), einen dritten Schubstangenmechanismus (250) und einen vierten Schubstangenmechanismus (260), wobei die zweite Hauptwellenbaugruppe (220) und die erste Hauptwellenbaugruppe (210) gegenüber einander angeordnet sind, der dritte Schubstangenmechanismus (250) und der vierte Schubstangenmechanismus (260) auf einer Seite der zweiten Hauptwellenbaugruppe (220) angeordnet sind und die Seite der zweiten Hauptwellenbaugruppe (220) der ersten Hauptwellenbaugruppe (210) zugewandt ist, und der dritte Schubstangenmechanismus (250) und der vierte Schubstangenmechanismus (260) jeweils mit zwei gegenüberliegenden Enden der zweiten Hauptwellenbaugruppe (220) verbunden sind;
der dritte Schubstangenmechanismus (250) eine dritte Verbindungsstange (251) umfasst, und ein Ende der dritten Verbindungsstange (251) drehbar mit der zweiten Hauptwellenbaugruppe (220) verbunden ist;
eine Vielzahl von in Umfangsrichtung verteilten dritten Aussparungsabschnitten (221) an einem ersten Ende der zweiten Hauptwellenbaugruppe (220) angeordnet ist und das erste Ende der zweiten Hauptwellenbaugruppe (220) der dritten Verbindungsstange (251) zugewandt ist, eine Oberfläche des dritten Aussparungsabschnitts (221) eine Schräge ist, und die Oberfläche des dritten Aussparungsabschnitts (221) der dritten Verbindungsstange (251) zugewandt ist, dritte Vorsprungsabschnitte (2511) in einer Eins-zu-Eins-Entsprechung zu den dritten Aussparungsabschnitten (221) auf einer Seite der dritten Verbindungsstange (251) angeordnet sind und die Seite der dritten Verbindungsstange (251) der zweiten Hauptwellenbaugruppe (220) zugewandt ist, sich jeder dritte Vorsprungsabschnitt (2511) in einem entsprechenden dritten Aussparungsabschnitt (221) befindet, eine Oberfläche des dritten Vorsprungsabschnitts (2511), die dem dritten Aussparungsabschnitt (221) zugewandt ist, an der Oberfläche des dritten Aussparungsabschnitts (221), die dem dritten Vorsprungsabschnitt (2511) zugewandt ist, befestigt ist, und sich jeder dritte Vorsprungsabschnitt (2511) relativ zu dem dritten Aussparungsabschnitt (221) entlang einer Erstreckungsrichtung des entsprechenden dritten Aussparungsabschnitts (221) bewegen kann;
der vierte Schubstangenmechanismus (260) eine vierte Verbindungsstange (261) umfasst, und ein Ende der vierten Verbindungsstange (261) drehbar mit der zweiten Hauptwellenbaugruppe (220) verbunden ist; und
eine Vielzahl von in Umfangsrichtung verteilten vierten Aussparungsabschnitten (222) an einem zweiten Ende der zweiten Hauptwellenbaugruppe (220) angeordnet ist und das zweite Ende der zweiten Hauptwellenbaugruppe (220) der vierten Verbindungsstange (261) zugewandt ist, eine Oberfläche des vierten Aussparungsabschnitts (222) eine Schräge ist, und die Oberfläche des vierten Aussparungsabschnitts (222) der vierten Verbindungsstange (261) zugewandt ist, vierte Vorsprungsabschnitte (2611) in einer Eins-zu-Eins-Entsprechung zu den vierten Aussparungsabschnitten (222) auf einer Seite der vierten Verbindungsstange (261) angeordnet sind und die Seite der vierten Verbindungsstange (261) der zweiten Hauptwellenbaugruppe (220) zugewandt ist, sich jeder vierte Vorsprungsabschnitt (2611) in einem entsprechenden vierten Aussparungsabschnitt (222) befindet, eine Oberfläche des vierten Vorsprungsabschnitts (2611), die dem vierten Aussparungsabschnitt (222) zugewandt ist, an der Oberfläche des vierten Aussparungsabschnitts (222), die dem vierten Vorsprungsabschnitt (2611) zugewandt ist, befestigt ist, und sich jeder vierte Vorsprungsabschnitt (2611) relativ zu dem vierten Aussparungsabschnitt (222) entlang einer Erstreckungsrichtung des entsprechenden vierten Aussparungsabschnitts (222) bewegen kann,
wobei der dritte Schubstangenmechanismus (250) und der vierte Schubstangenmechanismus (260) dazu konfiguriert sind, eine Schwebe-Reibungskraft für den Klappmechanismus (200) bereitzustellen.

3. Klappmechanismus (200) nach Anspruch 2, ferner umfassend eine erste Stiftwelle (201), wobei die erste Stiftwelle (201) nacheinander durch die erste Hauptwellenbaugruppe (210), die erste Verbindungsstange (231), die dritte Verbindungsstange (251) und die zweite Hauptwellenbaugruppe (220) hindurchgeht, die erste Stiftwelle (201) an der ersten Hauptwellenbaugruppe (210) befestigt ist und an der zweiten Hauptwellenbaugruppe (220) befestigt ist, sich die erste Verbindungsstange (231) um eine axiale Richtung der ersten Stiftwelle (201) relativ zu der ersten Stiftwelle (201) drehen kann und sich die dritte Verbindungsstange (251) um die axiale Richtung der ersten Stiftwelle (201) relativ zu der ersten Stiftwelle (201) drehen kann.

4. Klappmechanismus (200) nach Anspruch 2 oder 3, ferner umfassend eine zweite Stiftwelle (202), wobei die zweite Stiftwelle (202) nacheinander durch die erste Hauptwellenbaugruppe (210), die zweite Verbindungsstange (241), die vierte Verbindungsstange (261) und die zweite Hauptwellenbaugruppe (220) hindurchgeht, die zweite Stiftwelle (202) an der ersten Hauptwellenbaugruppe (210) befestigt ist und an der zweiten Hauptwellenbaugruppe (220) befestigt ist, sich die zweite Verbindungsstange (241) um eine axiale Richtung der zweiten Stiftwelle (202) relativ zu der zweiten Stiftwelle (202) drehen kann und sich die vierte Verbindungsstange (261) um die axiale Richtung der zweiten Stiftwelle (202) relativ zu der zweiten Stiftwelle (202) drehen kann.

5. Klappmechanismus (200) nach einem der Ansprüche 1 bis 4, ferner umfassend einen ersten Synchronisationsmechanismus (270), wobei der erste Synchronisationsmechanismus (270) ein erstes drehendes Zahnrad (271), ein zweites drehendes Zahnrad (272) und eine erste Synchronisationszahnradbaugruppe (273, 274) umfasst, wobei sich die erste Synchronisationszahnradbaugruppe (273, 274) zwischen dem ersten drehenden Zahnrad (271) und dem zweiten drehenden Zahnrad (272) befindet und mit dem ersten drehenden Zahnrad (271) und dem zweiten drehenden Zahnrad (272) in Eingriff steht; und
das erste drehende Zahnrad (271) an der ersten Verbindungsstange (231) befestigt ist, das zweite drehende Zahnrad (272) an der zweiten Verbindungsstange (241) befestigt ist, sich das erste drehende Zahnrad (271) relativ zu der ersten Hauptwellenbaugruppe (210) drehen kann, und sich die erste Synchronisationszahnradbaugruppe (273, 274) und das erste drehende Zahnrad (271) synchron drehen, um eine synchrone Rückwärtsbewegung des ersten drehenden Zahnrads (271) und des zweiten drehenden Zahnrads (272) zu implementieren.

6. Klappmechanismus (200) nach Anspruch 5, wobei das erste drehende Zahnrad (271) an einer anderen Seite der ersten Verbindungsstange (231) befestigt ist, wobei die andere Seite der ersten Verbindungsstange (231) der zweiten Verbindungsstange (241) zugewandt ist, das zweite drehende Zahnrad (272) an einer anderen Seite der zweiten Verbindungsstange (241) befestigt ist, wobei die andere Seite der zweiten Verbindungsstange (241) der ersten Verbindungsstange (231) zugewandt ist, und sich die erste Synchronisationszahnradbaugruppe (273, 274) zwischen der ersten Verbindungsstange (231) und der zweiten Verbindungsstange (241) befindet.

7. Klappmechanismus (200) nach Anspruch 2 und einem der Ansprüche 3 bis 6, ferner umfassend einen zweiten Synchronisationsmechanismus (280), wobei der zweite Synchronisationsmechanismus (280) ein drittes drehendes Zahnrad (281), ein viertes drehendes Zahnrad (282) und eine zweite Synchronisationszahnradbaugruppe (283, 284) umfasst, wobei sich die zweite Synchronisationszahnradbaugruppe (283, 284) zwischen dem dritten drehenden Zahnrad (281) und dem vierten drehenden Zahnrad (282) befindet und mit dem dritten drehenden Zahnrad (281) und dem vierten drehenden Zahnrad (282) in Eingriff steht; und
das dritte drehende Zahnrad (281) an der dritten Verbindungsstange (251) befestigt ist, das vierte drehende Zahnrad (282) an der vierten Verbindungsstange (261) befestigt ist, sich das dritte drehende Zahnrad (281) relativ zu der zweiten Hauptwellenbaugruppe (220) drehen kann, und sich die zweite Synchronisationszahnradbaugruppe (283, 284) und das dritte drehende Zahnrad (281) synchron drehen, um eine synchrone Rückwärtsbewegung des dritten drehenden Zahnrads (281) und des vierten drehenden Zahnrads (282) zu implementieren.

8. Klappmechanismus (200) nach Anspruch 7, wobei das dritte drehende Zahnrad (281) an einer anderen Seite der dritten Verbindungsstange (251) befestigt ist, wobei die andere Seite der dritten Verbindungsstange (251) der vierten Verbindungsstange (261) zugewandt ist, das vierte drehende Zahnrad (282) an einer anderen Seite der vierten Verbindungsstange (261) befestigt ist, wobei die andere Seite der vierten Verbindungsstange (261) der dritten Verbindungsstange (251) zugewandt ist, und sich die zweite Synchronisationszahnradbaugruppe (283, 284) zwischen der dritten Verbindungsstange (251) und der vierten Verbindungsstange (261) befindet.

9. Klappmechanismus (200) nach einem der Ansprüche 2 bis 8, ferner umfassend einen Sicherungsring (203), wobei sich der Sicherungsring (203) auf einer Seite der zweiten Hauptwellenbaugruppe (220) befindet, die von der ersten Hauptwellenbaugruppe (210) entfernt ist, und der Sicherungsring relativ zu der ersten Hauptwellenbaugruppe (210) und der zweiten Hauptwellenbaugruppe (220) befestigt ist.

10. Klappmechanismus (200) nach einem der Ansprüche 1 bis 9, wobei:
eine Oberfläche jedes der ersten Vorsprungsabschnitte (2311) eine Schräge ist und die Oberfläche dem ersten Aussparungsabschnitt (211) zugewandt ist, und die Schräge der Oberfläche des ersten Vorsprungsabschnitts (2311) einer Form der Schräge des ersten Aussparungsabschnitts (211) gegenüberliegt,
eine Größe des ersten Aussparungsabschnitts (211) in der Erstreckungsrichtung größer als eine Größe des ersten Vorsprungsabschnitts (2311) in der Erstreckungsrichtung ist,
eine Oberfläche jedes der zweiten Vorsprungsabschnitte (2411) eine Schräge ist und die Oberfläche dem zweiten Aussparungsabschnitt (212) zugewandt ist, und die Schräge der Oberfläche des zweiten Vorsprungsabschnitts (2411) einer Form der Schräge des zweiten Aussparungsabschnitts (212) gegenüberliegt, und
eine Größe des zweiten Aussparungsabschnitts (212) in der Erstreckungsrichtung größer als eine Größe des zweiten Vorsprungsabschnitts (2411) in der Erstreckungsrichtung ist.

11. Klappmechanismus (200) nach Anspruch 2 und einem der Ansprüche 3-10, wobei:
eine Oberfläche jedes der dritten Vorsprungsabschnitte (2511) eine Schräge ist und die Oberfläche dem dritten Aussparungsabschnitt (221) zugewandt ist, und die Schräge der Oberfläche des dritten Vorsprungsabschnitts (2511) einer Form der Schräge des dritten Aussparungsabschnitts (221) gegenüberliegt,
eine Größe des dritten Aussparungsabschnitts (221) in der Erstreckungsrichtung größer als eine Größe des dritten Vorsprungsabschnitts (2511) in einer Erstreckungsrichtung ist,
eine Oberfläche jedes der vierten Vorsprungsabschnitte (2611) eine Schräge ist und die Oberfläche dem vierten Aussparungsabschnitt (222) zugewandt ist, und die Schräge der Oberfläche des vierten Vorsprungsabschnitts (2611) einer Form der Schräge des vierten Aussparungsabschnitts (222) gegenüberliegt, und
eine Größe des vierten Aussparungsabschnitts (222) in der Erstreckungsrichtung größer als eine Größe des vierten Vorsprungsabschnitts (2611) in einer Erstreckungsrichtung ist.

12. Elektronische Vorrichtung (1), umfassend ein erstes Gehäuse (10), ein zweites Gehäuse (20), ein flexibles Display (30) und den Klappmechanismus (100, 200) nach einem der Ansprüche 1 bis 11, wobei der Klappmechanismus mit dem ersten Gehäuse (10) und dem zweiten Gehäuse (20) verbunden ist, so dass das erste Gehäuse (10) und das zweite Gehäuse (20) relativ zueinander zu zusammengeklappt oder aufgeklappt werden; und
das flexible Display (30) auf dem ersten Gehäuse (10), dem zweiten Gehäuse (20) und dem Klappmechanismus (100, 200) gelegt ist, und das flexible Display (30) an dem ersten Gehäuse (10) und dem zweiten Gehäuse (20) befestigt ist.

## Revendications

1. Mécanisme de pliage (100, 200) ayant une fonction de vol stationnaire, comprenant un premier ensemble d'arbre principal (210), un premier mécanisme de tige de poussée (120, 230) et un deuxième mécanisme de tige de poussée (130, 240), dans lequel le premier mécanisme de tige de poussée (120, 230) et le deuxième mécanisme de tige de poussée (130, 240) sont situés d'un même côté du premier ensemble d'arbre principal (210), et le premier mécanisme de tige de poussée (120, 230) et le deuxième mécanisme de tige de poussée (130, 240) sont respectivement reliés à deux extrémités opposées du premier ensemble d'arbre principal (210) ;
le premier mécanisme de tige de poussée (230) comprend une première tige de raccordement (231), et une extrémité de la première tige de raccordement (231) est reliée de manière rotative au premier ensemble d'arbre principal (210) ;
**caractérisé par**
une pluralité de premières parties d'évidement (211) réparties circonférentiellement sont disposées au niveau d'une première extrémité du premier ensemble d'arbre principal (210), et ladite première extrémité du premier ensemble d'arbre principal (210) fait face à la première tige de raccordement (231), une surface de la première partie d'évidement (211) est en pente, et ladite surface de la première partie d'évidement (211) fait face à la première tige de raccordement (231), des premières parties en saillie (2311) en correspondance biunivoque avec les premières parties d'évidement (211) sont disposées sur un côté de la première tige de raccordement (231), et ledit côté de la première tige de raccordement (231) fait face au premier ensemble d'arbre principal (210), chaque première partie en saillie (2311) est située dans une première partie d'évidement (211) correspondante, une surface de la première partie en saillie (2311) faisant face à la première partie d'évidement (211) est fixée à la surface de la première partie d'évidement (211) faisant face à la première partie en saille (2311), et chaque première partie en saillie (2311) peut se déplacer par rapport à la première partie d'évidement (211) le long d'une direction d'extension de la première partie d'évidement (211) correspondante ;
le deuxième mécanisme de tige de poussée (240) comprend une deuxième tige de raccordement (241), et une extrémité de la deuxième tige de raccordement (241) est reliée de manière rotative au premier ensemble d'arbre principal (210) ; et
une pluralité de deuxièmes parties d'évidement (212) réparties circonférentiellement sont disposées au niveau d'une seconde extrémité du premier ensemble d'arbre principal (210), et ladite seconde extrémité du premier ensemble d'arbre principal (210) fait face à la deuxième tige de raccordement (241), une surface de la deuxième partie d'évidement (212) est en pente, et ladite surface de la deuxième partie d'évidement (212) fait face à la deuxième tige de raccordement (241), des deuxièmes parties en saillie (2411) en correspondance biunivoque avec les deuxièmes parties d'évidement (212) sont disposées sur un côté de la deuxième tige de raccordement (241), et ledit côté de la deuxième tige de raccordement (241) fait face au premier ensemble d'arbre principal (210), chaque deuxième partie en saillie (2411) est située dans une deuxième partie d'évidement (212) correspondante, une surface de la deuxième partie en saillie (2411) faisant face à la deuxième partie d'évidement (212) est fixée à la surface de la deuxième partie d'évidement (212) faisant face à la deuxième partie en saille (2411), et chaque deuxième partie en saillie (2411) peut se déplacer par rapport à la deuxième partie d'évidement (212) le long d'une direction d'extension de la deuxième partie d'évidement (212) correspondante,
dans lequel le premier mécanisme de tige de poussée (230) et le deuxième mécanisme de tige de poussée (240) sont configurés pour fournir une force de frottement en vol stationnaire pour le mécanisme de pliage (200).

2. Mécanisme de pliage (200) selon la revendication 1, comprenant en outre un second ensemble d'arbre principal (220), un troisième mécanisme de tige de poussée (250) et un quatrième mécanisme de tige de poussée (260), dans lequel le second ensemble d'arbre principal (220) et le premier ensemble d'arbre principal (210) sont disposés oppposés l'un de l'autre, le troisième mécanisme de tige de poussée (250) et le quatrième mécanisme de tige de poussée (260) sont situés sur un côté du second ensemble d'arbre principal (220) et ledit côté du second ensemble d'arbre principal (220) fait face au premier ensemble d'arbre principal (210), et le troisième mécanisme de tige de poussée (250) et le quatrième mécanisme de tige de poussée (260) sont respectivement reliés aux deux extrémités opposées du second ensemble d'arbre principal (220) ;
le troisième mécanisme de tige de poussée (250) comprend une troisième tige de raccordement (251), et une extrémité de la troisième tige de raccordement (251) est reliée de manière rotative au second ensemble d'arbre principal (220) ;
une pluralité de troisièmes parties d'évidement (221) réparties circonférentiellement sont disposées au niveau d'une première extrémité du second ensemble d'arbre principal (220), et ladite première extrémité du second ensemble d'arbre principal (220) fait face à la troisième tige de raccordement (251), une surface de la troisième partie d'évidement (221) est en pente, et ladite surface de la troisième partie d'évidement (221) fait face à la troisième tige de raccordement (251), des troisièmes parties en saillie (2511) en correspondance biunivoque avec les troisièmes parties d'évidement (221) sont disposées sur un côté de la troisième tige de raccordement (251), et ledit côté de la troisième tige de raccordement (251) fait face au second ensemble d'arbre principal (220), chaque troisième partie en saillie (2511) est située dans une troisième partie d'évidement (221) correspondante, une surface de la troisième partie en saillie (2511) faisant face à la troisième partie d'évidement (221) est fixée à la surface de la troisième partie d'évidement (221) faisant face à la troisième partie en saille (2511), et chaque troisième partie en saillie (2511) peut se déplacer par rapport à la troisième partie d'évidement (221) le long d'une direction d'extension de la troisième partie d'évidement (221) correspondante ;
le quatrième mécanisme de tige de poussée (260) comprend une quatrième tige de raccordement (261), et une extrémité de la quatrième tige de raccordement (261) est reliée de manière rotative au second ensemble d'arbre principal (220) ; et
une pluralité de quatrièmes parties d'évidement (222) réparties circonférentiellement sont disposées au niveau d'une seconde extrémité du second ensemble d'arbre principal (220), et ladite seconde extrémité du second ensemble d'arbre principal (220) fait face à la quatrième tige de raccordement (261), une surface de la quatrième partie d'évidement (222) est en pente, et ladite surface de la quatrième partie d'évidement (222) fait face à la quatrième tige de raccordement (261), des quatrièmes parties en saillie (2611) en correspondance biunivoque avec les quatrièmes parties d'évidement (222) sont disposées sur un côté de la quatrième tige de raccordement (261), et ledit côté de la quatrième tige de raccordement (261) fait face au second ensemble d'arbre principal (220), chaque quatrième partie en saillie (2611) est située dans une quatrième partie d'évidement (222) correspondante, une surface de la quatrième partie en saillie (2611) faisant face à la quatrième partie d'évidement (222) est fixée à la surface de la quatrième partie d'évidement (222) faisant face à la quatrième partie en saille (2611), et chaque quatrième partie en saillie (2611) peut se déplacer par rapport à la quatrième partie d'évidement (222) le long d'une direction d'extension de la quatrième partie d'évidement (222) correspondante,
dans lequel le troisième mécanisme de tige de poussée (250) et le quatrième mécanisme de tige de poussée (260) sont configurés pour fournir une force de frottement en vol stationnaire pour le mécanisme de pliage (200).

3. Mécanisme de pliage (200) selon la revendication 2, comprenant en outre un premier arbre à broche (201), dans lequel le premier arbre à broche (201) traverse successivement le premier ensemble d'arbre principal (210), la première tige de raccordement (231), la troisième tige de raccordement (251) et le second ensemble d'arbre principal (220), le premier arbre à broche (201) est fixé au premier ensemble d'arbre principal (210) et est fixé au second ensemble d'arbre principal (220), la première tige de raccordement (231) peut tourner autour d'une direction axiale du premier arbre à broche (201) par rapport au premier arbre à broche (201), et la troisième tige de raccordement (251) peut tourner autour de la direction axiale du premier arbre à broche (201) par rapport au premier arbre à broche (201).

4. Mécanisme de pliage (200) selon la revendication 2 ou 3, comprenant en outre un second arbre à broche (202), dans lequel le second arbre à broche (202) traverse successivement le premier ensemble d'arbre principal (210), la deuxième tige de raccordement (241), la quatrième tige de raccordement (261) et le second ensemble d'arbre principal (220), le second arbre à broche (202) est fixé au premier ensemble d'arbre principal (210) et est fixé au second ensemble d'arbre principal (220), la deuxième tige de raccordement (241) peut tourner autour d'une direction axiale du second arbre à broche (202) par rapport au second arbre à broche (202), et la quatrième tige de raccordement (261) peut tourner autour de la direction axiale du second arbre à broche (202) par rapport au second arbre à broche (202).

5. Mécanisme de pliage (200) selon l'une quelconque des revendications 1 à 4, comprenant en outre un premier mécanisme de synchronisation (270), dans lequel le premier mécanisme de synchronisation (270) comprend un premier engrenage rotatif (271), un deuxième engrenage rotatif (272) et un premier ensemble d'engrenages de synchronisation (273, 274), dans lequel le premier ensemble d'engrenages de synchronisation (273, 274) est situé entre le premier engrenage rotatif (271) et le deuxième engrenage rotatif (272) et est en prise avec le premier engrenage rotatif (271) et le deuxième engrenage rotatif (272) ; et
le premier engrenage rotatif (271) est fixé à la première tige de raccordement (231), le deuxième engrenage rotatif (272) est fixé à la deuxième tige de raccordement (241), le premier engrenage rotatif (271) peut tourner par rapport au premier ensemble d'arbre principal (210), et le premier ensemble d'engrenages de synchronisation (273, 274) et le premier engrenage rotatif (271) tournent de manière synchrone, pour mettre en œuvre un mouvement inverse synchrone du premier engrenage rotatif (271) et du deuxième engrenage rotatif (272).

6. Mécanisme de pliage (200) selon la revendication 5, dans lequel le premier engrenage rotatif (271) est fixé à un autre côté de la première tige de raccordement (231), dans lequel l'autre côté de la première tige de raccordement (231) fait face à la deuxième tige de raccordement (241), le deuxième engrenage rotatif (272) est fixé à un autre côté de la deuxième tige de raccordement (241), dans lequel l'autre côté de la deuxième tige de raccordement (241) fait face à la première tige de raccordement (231), et le premier ensemble d'engrenages de synchronisation (273, 274) est situé entre la première tige de raccordement (231) et la deuxième tige de raccordement (241).

7. Mécanisme de pliage (200) selon la revendication 2 et l'une quelconque des revendications 3 à 6, comprenant en outre un second mécanisme de synchronisation (280), dans lequel le second mécanisme de synchronisation (280) comprend un troisième engrenage rotatif (281), un quatrième engrenage rotatif (282) et un second ensemble d'engrenages de synchronisation (283, 284), dans lequel le second ensemble d'engrenages de synchronisation (283, 284) est situé entre le troisième engrenage rotatif (281) et le quatrième engrenage rotatif (282) et est en prise avec le troisième engrenage rotatif (281) et le quatrième engrenage rotatif (282) ; et
le troisième engrenage rotatif (281) est fixé à la troisième tige de raccordement (251), le quatrième engrenage rotatif (282) est fixé à la quatrième tige de raccordement (261), le troisième engrenage rotatif (281) peut tourner par rapport au second ensemble d'arbre principal (220), et le second ensemble d'engrenages de synchronisation (283, 284) et le troisième engrenage rotatif (281) tournent de manière synchrone, pour mettre en œuvre un mouvement inverse synchrone du troisième engrenage rotatif (281) et du quatrième engrenage rotatif (282).

8. Mécanisme de pliage (200) selon la revendication 7, dans lequel le troisième engrenage rotatif (281) est fixé à un autre côté de la troisième tige de raccordement (251), dans lequel l'autre côté de la troisième tige de raccordement (251) fait face à la quatrième tige de raccordement (261), le quatrième engrenage rotatif (282) est fixé à un autre côté de la quatrième tige de raccordement (261), dans lequel l'autre côté de la quatrième tige de raccordement (261) fait face à la troisième tige de raccordement (251), et le second ensemble d'engrenages de synchronisation (283, 284) est situé entre la troisième tige de raccordement (251) et la quatrième tige de raccordement (261).

9. Mécanisme de pliage (200) selon l'une quelconque des revendications 2 à 8, comprenant en outre un anneau élastique (203), dans lequel l'anneau élastique (203) est situé sur un côté du second ensemble d'arbre principal (220) qui est éloigné du premier ensemble d'arbre principal (210), et l'anneau élastique est fixé par rapport au premier ensemble d'arbre principal (210) et au second ensemble d'arbre principal (220).

10. Mécanisme de pliage (200) selon l'une quelconque des revendications 1 à 9, dans lequel :
une surface de chacune de la première partie en saillie (2311) est une pente et ladite surface fait face à la première partie d'évidement (211), et ladite pente de la surface de la première partie en saillie (2311) est opposée à une forme de la pente de la première partie d'évidement (211),
une taille de la première partie d'évidement (211) dans la direction d'extension est supérieure à une taille de la première partie en saillie (2311) dans la direction d'extension,
une surface de chacune de la deuxième partie en saillie (2411) est une pente et ladite surface fait face à la deuxième partie d'évidement (212), et ladite pente de la surface de la deuxième partie en saillie (2411) est opposée à une forme de la pente de la deuxième partie d'évidement (212), et
une taille de la deuxième partie d'évidement (212) dans la direction d'extension est supérieure à une taille de la deuxième partie en saillie (2411) dans la direction d'extension.

11. Mécanisme de pliage (200) selon la revendication 2 et l'une quelconque des revendications 3 à 10, dans lequel :
une surface de chacune de la troisième partie en saillie (2511) est une pente et ladite surface fait face à la troisième partie d'évidement (221), et ladite pente de la surface de la troisième partie en saillie (2511) est opposée à une forme de la pente de la troisième partie d'évidement (221),
une taille de la troisième partie d'évidement (221) dans la direction d'extension est supérieure à une taille de la troisième partie en saillie (2511) dans une direction d'extension,
une surface de chacune de la quatrième partie en saillie (2611) est une pente et ladite surface fait face à la quatrième partie d'évidement (222), et ladite pente de la surface de la quatrième partie en saillie (2611) est opposée à une forme de la pente de la quatrième partie d'évidement (222), et
une taille de la quatrième partie d'évidement (222) dans la direction d'extension est supérieure à une taille de la quatrième partie en saillie (2611) dans une direction d'extension.

12. Dispositif électronique (1), comprenant un premier boîtier (10), un second boîtier (20), un affichage flexible (30), et le mécanisme de pliage (100, 200) selon l'une quelconque des revendications 1 à 11, dans lequel le mécanisme de pliage est relié au premier boîtier (10) et au second boîtier (20), de telle sorte que le premier boîtier (10) et le second boîtier (20) soient pliés et dépliés l'un par rapport à l'autre ; et l'affichage flexible (30) est placé sur le premier boîtier (10), le second boîtier (20) et le mécanisme de pliage (100, 200), et l'affichage flexible (30) est fixé au premier boîtier (10) et au second boîtier (20).
